**Europäisches Patentamt**

**European Patent Office**

**Office européen des brevets**

(11) Veröffentlichungsnummer: **0 004 965**

**A1**

(12) ## EUROPÄISCHE PATENTANMELDUNG

(21) Anmeldenummer: **79101168.7**

(22) Anmeldetag: **17.04.79**

(51) Int. Cl.²: **B 64 C 31/02**
**B 60 K 1/00**

(30) Priorität: **17.04.78 DE 7811495 U**

(43) Veröffentlichungstag der Anmeldung:
**31.10.79 Patentblatt 79/22**

(84) Benannte Vertragsstaaten:
**BE CH FR GB IT**

(71) Anmelder: **Weishaar, Franz**
**Sulzbachstrasse 22**
**D-6600 Saarbrücken 3(DE)**

(72) Erfinder: **Weishaar, Franz**
**Sulzbachstrasse 22**
**D-6600 Saarbrücken 3(DE)**

(74) Vertreter: **Boecker, Carl Otto, Dipl.-Ing.**
**Ensheimer Strasse 48**
**D-6670 St.Ingbert(DE)**

(54) Motorisierter Hängegleiter, sogenannter Drachen.

(57) Ein motorisierter Hängegleiter, sogenannter Drachen, mit einem Querrohr (2) und einem dreieckförmigen Steuerbügel (3), der an der Kreuzungsstelle zwischen Querrohr und einem Längsrohr (1) mit dem Querrohr verbunden ist, ist durch ein Tragrohr (14) ergänzt, das zum Querrohr parallel verläuft und mit dem dreieckförmigen Steuerbügel (3) verbunden ist. Das Tragrohr (14) ist kürzer als das Querrohr und trägt an den Enden je einen Propellermotor (8,9). Die Gehäuse der Motoren sind über Zuglaschen (15,16) mit dem Querrohr verbunden.

*Whr III*

Franz Weishaar
Sulzbachstraße 22

6600 Saarbrücken 3

- 1 -

<u>Motorisierter Hängegleiter, sogenannter Drachen</u>

Die Neuerung betrifft einen motorisierten Hängegleiter, einen
sogenannten Drachen, mit einem zum Befestigen des Segels dienenden kreuzartigen Rohrrahmen, der aus einem Längsrohr und einem
mit einem dreieckförmigen Steuerbügel verbundenen Querrohr
besteht. Bekannt ist es, derartige Hängegleiter mit einem einzigen, von dem Längsrohr getragenen mittleren Propellermotor zu
versehen, wodurch der ursprünglich als reines Sportgerät
konzipierte Hängegleiter auch für andere Zwecke verwendbar gemacht wurde, beispielsweise zur Überwachung von Badesträndern.
Auch hat ein motorisierter Hängegleiter als Sportgerät den
Vorteil, daß er eine Rückkehr zum Startplatz ermöglicht.

Die bisher bekannten motorisierten Hängegleiter mit Mittelmotor
sind aber fast schon als motorisiertes Segelflugzeug anzusprechen, da der vorn oder hinten an dem Längsrohr befestigte
Mittelmotor in einem waagerechten Abstand von der durch das
Querrohr verlaufenden Schwerlinie des Hängegleiters angeordnet
ist, weshalb zumindest ein Höhensteuer erforderlich ist. Da der
bekannte motorisierte Hängegleiter nicht mehr durch Gewichtsverlagerungen des Fliegers zum Kurvenflug zu bringen ist, wurde
auch ein Seitensteuer erforderlich. Außer der Drehzahl-Steuerung
für den Motor hat der Flieger also auch noch Höhen- und Seitensteuer zu betätigen, weshalb motorisierte Hängegleiter sich in

0004965

der Praxis nicht nennenswert durchzusetzen vermochten.

Der Neuerung liegt die Aufgabe zugrunde, einen motorisierten Hängegleiter zu schaffen, der ohne Höhen- und Seitensteuer auskommt. Diese Aufgabe wird dadurch gelöst, daß mit dem dreieckförmigen Steuerbügel ein zum Querrohr paralleles Tragrohr verbunden ist, das kürzer ist als das Querrohr und an dessen Enden je ein Propellermotor starr befestigt ist. Hierdurch wird erreicht, daß die Motoren praktisch an dem Querrohr aufgehängt sind und höchstens die Masse des um das Querrohr unter Flugbedingungen möglicherweise schwingenden "Pendels" erhöhen. Die Gleichgewichtsbedingungen des Flugsystems ändern sich damit nicht, so daß Verhältnisse eingestellt werden, wie sie für den nicht motorisierten Hängegleiter gegeben sind. Die unter einem kleinen senkrechten Hebelarm am Querrohr angreifende Zugkraft der Motoren ist durch Gewichtsverlagerungen des Fliegers leicht auszugleichen, der bekanntlich hinter dem Steuerbügel in einer Gurtkonstruktion hängt und sich mit den Händen mit einer Querstrebe des dreieckförmigen Steuerbügels festhält.

Der Abstand der Motoren von der senkrechten Mittelebene des Hängegleiters soll etwa gleich einem Drittel der halben Länge des Querrohres sein, um das Tragrohr kurz zu halten, damit es sich beim harten Aufsetzen unter den Massenkräften der beiden Motoren nicht durchbiegt. Diese Massenkräfte können von dem Querrohr mit aufgenommen werden, wenn die Gehäuse der Motoren über Zuglaschen mit dem Querrohr verbunden werden.

Der Zwei-Motoren-Antrieb eröffnet auch die Möglichkeit, den Kurvenflug durch unterschiedliche Einstellung der Drehzahl der beiden Propellermotoren zu unterstützen oder auszuführen. Hierzu ist vorgesehen, daß die Propellermotoren durch am Steuerbügel, vorzugsweise an den beiden abwärts gerichteten Streben des mit dem Querrohr verbundenen Steuerbügels angeordnete gleichartige Betätigungselemente unabhängig voneinander steuerbar sind.

0004965

Wenn die Propellermotoren – wie bekannt - mit Fliehkraftkupplungen zwischen der Kurbelwelle und der Propellerwelle versehen sind, bestehen die Betätigungselemente einfach aus Drehhebeln zum Betätigen von entlang der Streben der Steuerbügels und des Tragrohres verlegten Drahtzügen, die zu den Vergasern der Motoren führen.

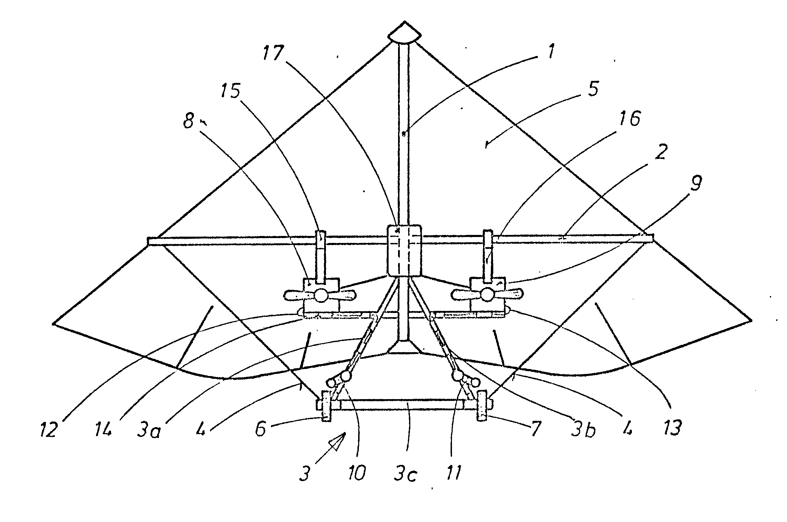

In der Zeichnung ist ein Ausführungsbeispiel eines motorisierten Hängegleiters gemäß der Neuerung mit zwei Propellermotoren dargestellt.

Der dargestellte Hängegleiter besteht aus einem Rohrrahmen mit dem Längsrohr 1, dem Querrohr 2 und dem dreieckförmigen Steuerbügel 3, der an der Kreuzungsstelle beider Rohre mit dem Querrohr 2 verbunden ist. Der gesamte Rohrrahmen ist durch Spanndrähte 4 verspannt, die von den Enden der waagerechten Achse 3c des Steuerbügels 3 ausgehen. An dem kreuzförmigen Rohrrahmen 1, 2 ist das Segel 5 befestigt. Die waagerechte Achse 3c des Steuerbügels 3 trägt an den Enden Laufräder 6,7 zum leichteren Transport des Gerätes. Der Flieger hängt in einer nicht dargestellten Gurtkonstruktion in Flugrichtung hinter dem Steuerbügel 3, so daß er sich mit beiden Händen an der waagerechten Achse 3c des Steuerbügels festhalten und den Hängegleiter durch Gewichtsverlagerungen steuern kann. Dies alles ist bekannt.

Neu ist die Anordnung von je einem Propellermotor 8 und 9 an den Enden eines Tragrohres 14, das parallel zu dem Querrohr 2 verlaufend mit den senkrechten Streben 2a, 3b des dreieckförmigen Steuerbügels 3 verbunden ist. Das Tragrohr 14 ist um so viel kürzer als das Querrohr 2, daß der Abstand der Motoren 8, 9 von der senkrechten Mittelebene des Hängegleiters jeweils etwa gleich einem Drittel der halben Länge des Querrohres 2 ist. Damit das Gewicht der Motoren 8, 9 nicht allein von dem Tragrohr 14 aufgenommen werden muß, sind die Gehäuse der Motoren über Zuglaschen 15, 16 mit dem Querrohr 2 verbunden. Die Propellermotoren 8, 9 sind handelsüblich und haben eine Leistung von je etwa 1,85 kW und wiegen jeweils 5 kg.

An den Streben 3a und 3b des Steuerbügels 3 sind je ein Drehgashebel 10 und 11 angeordnet, mit denen Drahtzüge 12 und 13
betätigt werden, die an den Streben 3a und 3b sowie dem Tragrohr 14 verlegt sind und zu den Vergasern der Propellermotoren 8,
59 führen. Diese sind somit unabhängig voneinander in ihrer
Drehzahl steuerbar. Wenn die Drehgashebel 10 und 11 auf Leerlauf
der Motoren gestellt werden, bleiben die Propeller stehen, da die
handelsüblichen Motoren mit Fliehkraftkupplungen zwischen der
Kurbelwelle und der Propellerwelle versehen sind. Bei Ausfall
eines Motors kann somit der Propeller des anderen Motors ebenfalls stillgesetzt werden, so daß der Hängegleiter wie ein
nicht motorisiertes Gerät weitergeflogen und sicher gelandet
werden kann.

Franz Weishaar
Sulzbachstraße 22

6600 Saarbrücken 3

-1-

Ansprüche

1. Motorisierter Hängegleiter, sogenannter Drachen, mit einem zum Befestigen des Segels dienenden kreuzförmigen Rohrrahmen, der aus einem Längsrohr und einem mit einem dreieckförmigen Steuerbügel versehenen Querrohr besteht, dadurch gekennzeichnet, daß mit dem dreieckförmigen Steuerbügel (3) ein zum Querrohr (2) paralleles Tragrohr (14) verbunden ist, das kürzer ist als das Querrohr und an dessen Enden je ein Propellermotor (8, 9) starr befestigt ist.

2. Hängegleiter nach Anspruch 1, dadurch gekennzeichnet, daß der Abstand der Motoren (8, 9 ) von der senkrechten Mittelebene des Hängegleiters jeweils etwa gleich einem Drittel der halben Länge des Querrohres (2) ist.

3. Hängegleiter nach Anspruch 1 oder 2, dadurch gekennzeichnet, daß die Gehäuse der Motoren (8, 9) über Zuglaschen (15, 16) mit dem Querrohr (2) verbunden sind.

4. Hängegleiter nach Anspruch 1, dadurch gekennzeichnet, daß die Propellermotoren (8, 9) durch an dem Steuerbügel, vorzugsweise an dessen beiden abwärts gerichteten Streben (3b, 3c) angeordnete gleichartige Betätigungselemente (10, 11) unabhängig voneinander steuerbar sind.

Telefon: (06894) 14396, Wohnung 7124 · Konten: Postscheckamt Essen 1013 28-438, Gebr.Röchling Bank St. Ingbert 20.013.490

5. Hängegleiter nach Anspruch 4, dadurch gekennzeichnet, daß
die Propellermotoren (8, 9) mit Fliehkraftkupplungen zwischen
der Kurbelwelle und der Propellerwelle versehen sind und die
Betätigungselemente aus Drehgashebeln (10, 11) zum Betätigen
von entlang der Streben (3b 3c) des Steuerbügels (3) und des
Tragrohres (14) verlegten Drahtzügen (12, 13) bestehen.

Whr III

**Europäisches Patentamt**

**EUROPÄISCHER RECHERCHENBERICHT**

**0004965**
Nummer der Anmeldung

EP 79 10 1168

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| XP | FR - A - 2 372 082 (MARTIN)<br><br>* Seite 1, Zeilen 13,17; Seite 2, Zeilen 23-31, 5-8 *<br><br>& DE - A - 2 752 182<br><br>-- | 1,2,4 |
| | FR - A - 2 306 125 (HENNEBUTE)<br><br>* Seite 3, Zeilen 14-27 *<br><br>---- | 1,2 |

**KLASSIFIKATION DER ANMELDUNG (Int.Cl.²)**

B 64 C 31/02
B 60 K 1/00

**RECHERCHIERTE SACHGEBIETE (Int. Cl.²)**

B 64 C 31/02

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-06-1979 | HAUGLUSTAINE |

EPA form 1503.1   06.78